# EUROPEAN PATENT APPLICATION

(11) **EP 1 421 860 A2**
(43) Date of publication of application: **26.05.2004**
(21) Application number: 03254249.0
(22) Date of filing: 04.07.2003
(51) Int. Cl.: A23L 3/3508, A23L 3/3445, A23L 3/3409, A21D 15/00

(54) **System and method of microbiocidal gas generation**

(30) Priority: 22.07.2002 US 199782
(71) Applicant: THE BOC GROUP, INC., Murray Hill, New Providence, New Jersey 07974-2082 (US)
(72) Inventor: Newman, Michael Duane, Hillsborough, New Jersey 08844 (US); McCormick, Stephen Allen, Warrington, Pennsylvania 18976 (US)
(74) Representative: Wickham, Michael

(57) **Abstract**

An apparatus and method of microbiocidal gas generation includes generating a microbiocidal agent, such as lactic acid, without the need for a carrier gas. A liquid microbiocidal agent is introduced into a heat exchanger where it is heated to generate a gaseous microbiocidal agent without a carrier gas for use with food products, while eliminating the costs, additional equipment and additional steps associated with the use of a carrier gas in the generation of microbiocidal agents. The microbiocidal gas is applied to a product, for example, a food product.

## Description

### FIELD AND BACKGROUND OF THE INVENTION

The invention relates generally to the application of microbiocidal substances to products, particularly food products. More particularly, the invention relates to the generation and the use of microbiocidal agents without using a carrier gas for the treatment of food products

The preservation of perishable products has been, and continues to be, the focus of considerable commercial interest. By extending the shelf life of a food product, economic value can be added to that food product. Approaches to this end are many and varied (e.g., tight control of storage conditions, packaging, post and *in situ* applications of preservatives) and various combinations of these and other techniques are known and in practice to one extent or another.

In the context of one particular group of food products, namely baked goods (e.g., muffins, crumpets, scones, bagels, cookies, breads, etc.), all of the above techniques are in use. For example, baked goods can be placed in frozen or refrigerated storage, covered with anaerobic packaging, and/or supplemented by the addition of preservatives. When such preservatives are used, the preservative can be added to either a batter or a mix from which the baked goods are prepared. Also, the preservative can be applied to finished baked goods. With respect to the finished baked goods, application of a small amount of the preservative can extend the shelf life of the baked goods from a typical 6-8 days to an extended 14-16 days when all other conditions (e.g., packaging, storage conditions, and the like) are equal. These preservatives can include a wide variety of substances (i.e., microbiocidal substances, antimicrobial substances, etc.) such as acetic acid, carbonic acid, mixtures thereof, and the like.

Current methods of generating and applying microbiocidal substances involve the use of a volatile gas, such as acetic acid, within a carrier gas. Volatile gases by nature are generally hazardous to work with, as they can be explosive under specific conditions.

The nature of volatile microbiocidal agents requires carrier gases to accommodate the volatile gases. The additional measures required during the design, fabrication, installation and use of equipment to be used with volatile gases and carrier gases can decrease the efficiency and increase the cost of a microbiocidal application process. For example, in order to use volatile gases, the following must be observed: explosion-proof components must be used, adding tremendous cost to the application system; specific procedures must be observed when storing the volatile gases, such storage oftentimes occurring off-site and out of the direct control of the supplier of the volatile gases; and detailed control and strict systems must be implemented to prevent leakage and prevent exposure to those in working with the volatile gases. The leakage of volatile gases can pose a significant risk to plant personnel.

The use of a carrier gas requires that the microbiocidal substance be atomized. The atomized substance is then converted to vapor by mixing it with a super-heated carrier gas. The system requires the use of a metering system on the carrier gas, a metering pump for the microbiocidal acid, a heating system for the carrier gas, as well as an atomization system from the microbiocidal agent and a mixing vessel for the process.

It would be beneficial if the use of carrier gases with microbiocidal agents, specifically non-volatile agents, could be reduced or eliminated. Further, it would be desirable to provide a microbiocidal agent food treatment system that uses microbiocidal agents that are not mixed with super-heated carrier gases.

Thus, an apparatus and method for providing treatment to a food product with a microbiocidal agent that is not combined with a carrier gas would be advantageous and therefore desirable, since such an apparatus and method would eliminate the need for the additional costs and equipment associated with the use of carrier gases in the treatment process.

### SUMMARY OF THE INVENTION

The present invention provides for the generation of a microbiocidal agent for the treatment of food products that overcome the aforementioned problems. In accordance with one aspect of the invention, a method of generating a microbiocidal agent is provided which includes providing a liquid microbiocidal agent, and heating the liquid microbiocidal agent to generate a gaseous microbiocidal agent. In this method, the heating step provides for the generation of the gaseous microbiocidal agent without a carrier gas.

Accordingly, the invention provides a method according to any one of claims 1 to 9, and an apparatus according to any one of claims 10 to 17.

### BRIEF DESCRIPTION OF THE DRAWINGS

For a more complete understanding of the present invention, embodiments of the invention are disclosed with reference to the accompanying drawings which are for illustrative purposes only. The invention is not limited in its application to the details of construction or the arrangement of the components illustrated in the drawings. The invention is capable of other embodiments or of being practiced or carried out in other various ways. Like reference numerals are used to indicate like components unless indicated otherwise.

In the drawings:
Figure 1 illustrates a flow diagram of a process for preparing a baked food product;
Figure 2 illustrates a flow diagram of another process for preparing a baked food product;
Figure 3 illustrates a schematic diagram of one treatment fluid generation system that includes the use of a carrier gas;
Figure 4 illustrates a perspective view of one embodiment of a microbiocidal agent generation system in accordance with the present invention;
Figure 5 illustrates a side cross-sectional view of the microbiocidal agent generation system of Figure 4;
Figure 6 illustrates a front view of the microbiocidal agent generation system of Figure 4;
Figure 7 illustrates another embodiment of a microbiocidal agent generation system in accordance with the present invention; and
Figure 8 illustrates a flowchart of a methodology associated with the generation of the microbiocidal agent in accordance with another embodiment of the present invention.

### DETAILED DESCRIPTION OF THE PREFERRED EMBODIMENTS

Although the present invention is described below in the context of applying a preservative (e.g., a microbiocidal substance) to a baked good, the invention can also be employed with, and has applicability to, many different application processes.

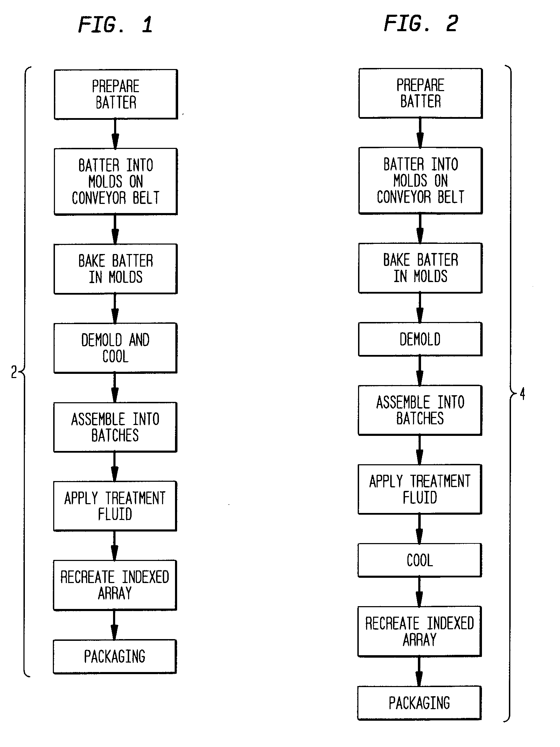

Referring to Figure 1, an outline 2 is illustrated for preparation of commercial quantities of a food product, namely a baked good (e.g., muffin, crumpet, scone, bagel, cookie, bread, and the like). Batter is prepared and then poured into molds that are either carried on, or form a part of, a conveyor mechanism. The conveyor mechanism moves the batter through a baking zone in which the batter is fully baked.

Upon leaving the baking zone, the baked good is de-molded, typically onto a second conveyor mechanism. The de-molding procedure typically deposits the baked goods upon the second conveyor mechanism such that the baked goods are arranged in an indexed array. The indexed array of baked goods are then conveyed through a cooling tunnel to bring the baked goods to a temperature appropriate for packaging (e.g., room temperature or slightly above).

In some instances as illustrated in Figure 1, prior to packaging, the baked goods will pass through a treatment apparatus. Prior to encountering the treatment apparatus, the baked goods are assembled into batches. In batches, the baked goods are transported through the treatment apparatus where a treatment fluid containing a preservative is applied to an external surface of the baked goods. Typical preservatives can include a wide variety of substances (i.e., microbiocidal substances, antimicrobial substances, etc.). Preservatives have the ability to radically reduce the pH of food products and, as such, can eradicate and/or eliminate bacteria present within the food product. The treatment fluid can include a preservative or a mixture containing the preservative. For example, a vaporized mixture of carbon dioxide and an application agent can be employed as the treatment fluid.

In other instances, as illustrated by outline 4 in Figure 2, placement of the cooling tunnel and the treatment apparatus are reversed. In other words, the baked goods are de-molded, assembled into batches, treated with the treatment fluid, cooled, restored to the indexed array, and then packaged.

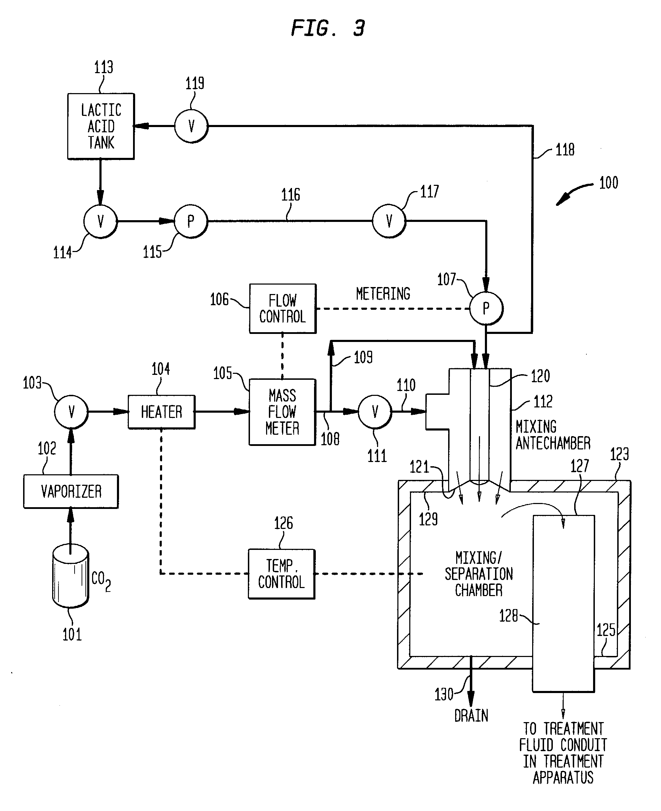

Figure 3 illustrates a treatment fluid generation apparatus that includes the use of a carrier gas and, unlike the present invention, generates a microbiocidal agent in the form of an atomised liquid. The description of Figure 3 is thus provided for comparative and explanatory purposes.

In system 100, tank 101 holds liquid carbon dioxide, typically at about three hundred (300) psig. Liquid carbon dioxide is transferred to vaporizer 102 and converted to a gas substantially free of any droplets. The gas is then passed through pressure reduction valve 103 and the pressure of the gas is reduced from three hundred (300) psig to one hundred (100) psig. The gaseous CO₂ is then transferred to heater 104 and heated to substantially the same temperature as the contents of mixing/separation chamber 123 (e.g., 140° F). Temperature control unit 126 coordinates the temperature of heater 104 and of chamber 123. From heater 104, the gaseous carbon dioxide at one hundred (100) psig is transferred to mass flow meter 105, which is controlled by flow control 106. As long as pump 107 is in proper operation, flow control 106 allows carbon dioxide to move from mass flow meter 105 into pipe 108. Pipe 108 divides into pipes 109 and 110. While the amount of carbon dioxide each of pipes 109 and 110 will carry can vary to convenience, typically pipe 109 will carry about ten percent (10%) and pipe 110 will carry the remaining about ninety percent (90%) by weight of the carbon dioxide. The stream of carbon dioxide passing through in pipe 110 can also pass through control valve 111 before entering mixing antechamber 112.

Liquid acid, such as lactic acid, is removed from tank 113 through check valve 114 by the action of pump 115. When lactic acid is used, the liquid lactic acid moves through line 116 and valve 117 into metering pump 107. If atomization nozzle 120 is operational, then the liquid lactic acid is fed into the atomization nozzle where the liquid lactic acid is atomized with carbon dioxide delivered to the nozzle through line 109. If atomization nozzle 120 is not operative, then the liquid lactic acid is returned to tank 113 by way of line 118 and check valve 119.

Atomized lactic acid is transferred from atomization nozzle 120 into the upper section of mixing/separation chamber 123 in which it is vaporized by contact with carbon dioxide delivered from mixing antechamber 112 through orifice plate 121. The carbon dioxide delivered from line 110 into antechamber 112 passes through pressure reduction valve 111 in which the pressure of the carbon dioxide is reduced from one hundred (100) psig to about five (5) psig. The pressure of the atomized lactic acid as delivered to mixing/separation chamber 123 is also about five (5) psig. The temperature, pressure and volume of carbon dioxide introduced into the upper section of mixing/separation chamber 123 is sufficient such that the atomized lactic acid is essentially completely vaporized upon contact with it.

Atomization nozzle 120 passes through antechamber 112 and orifice plate 121, and opens into the upper section of mixing/separation chamber 123. Atomization nozzle 120 can extend into the upper section of mixing/separation chamber 123 to any convenient length, but typically the end of the nozzle is flush with or extends only a short distance beyond orifice plate 121.

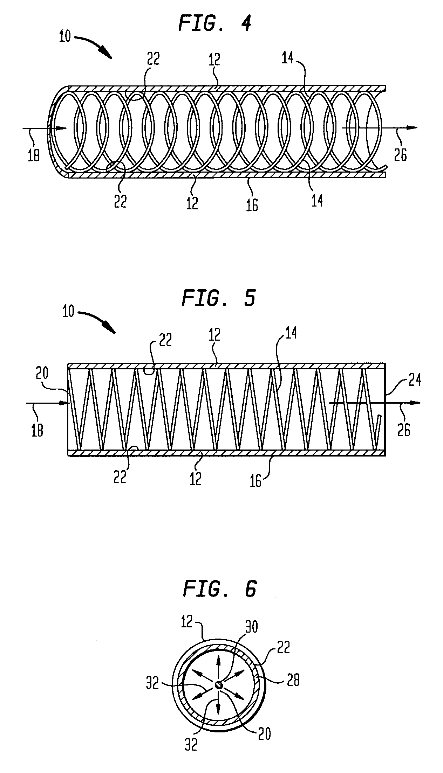

Referring now to Figures 4 and 5, the microbiocidal agent generation system of the present invention is shown generally at 10. The system 10 includes a tubular member 12 that acts as a heat exchanger. Tubular member 12 is a heat source or is associated with a heat source such that tubular member 12 is capable of being heated. A portion of the outside of tubular member 12 has been removed to facilitate understanding and explanation. Although in this embodiment a spiral tube-type heat exchanger is shown, other sizes and shapes may be employed.

Disposed within tubular member 12 is insert 14. Insert 14 is preferably of a generally spiral configuration that causes liquid flowing into tubular member 12 to be disrupted and directed away from the center of tubular member 12, or to spirally disperse the liquid to the inner circumferential or the inner peripheral wall 22 of tubular member 12. In this embodiment, insert 14 imparts a spiral fluid flow to the liquid microbiocidal agent as the liquid microbiocidal agent travels through the member 12. An insert of any shape that is capable of directing the liquid to inner peripheral wall 22 may be used.

Tubular member 12 includes wall 16 that is heated, directly or indirectly, to facilitate heat transfer from the wall to the liquid travelling through tubular member 12. The general purpose of microbiocidal agent generation system 10 is to convert a liquid microbiocidal agent into a gaseous microbiocidal agent. Any suitable microbiocidal agent is contemplated, although lactic acid is preferred. Consistent with the purpose of converting the agent from a liquid phase to a gas phase, in operation liquid microbiocidal agent enters tubular member 12 at an inlet 20 in a direction indicated by arrow 18. Once introduced at inlet 20 of tubular member 12, insert 14 disrupts the flow of the liquid and directs the microbiocidal agent towards inner peripheral wall 22 of tubular member 12. Because tubular member 12 is heated, contact between the wall 22 of the tubular member 12 and the liquid microbiocidal agent will cause the liquid microbiocidal agent to heat as it proceeds through tubular member 12. Upon sufficient heating of the liquid microbiocidal agent, a gaseous microbiocidal agent is generated that exits the member 12 at outlet 24 in the direction indicated by arrow 26. In this manner, the (gaseous) microbiocidal agent is generated for delivery without the use of a carrier gas.

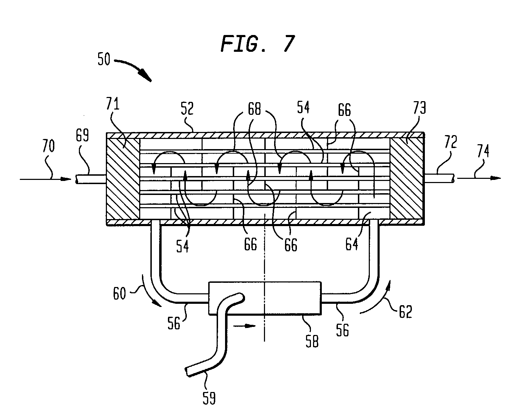

Figure 6 illustrates directing of the liquid microbiocidal agent 28 from a central region 30 of tubular member 12 in a radial fashion as indicated by, for example, direction arrows 32, such that the liquid microbiocidal agent 28 is dispersed against the inner peripheral wall 22 of tubular member 12 which is heated. In this manner, after the liquid microbiocidal agent 28 enters tubular member 12 at inlet 20, liquid microbiocidal agent 28 is directed along the inner peripheral wall 22 of tubular member 12 such that heat energy from heated tubular member 12 is transferred to liquid microbiocidal agent 28. This process allows the heat energy from the heated tubular shell 12 to generate the gaseous microbiocidal agent without the use of a carrier gas for the liquid agent.

The embodiment of the microbiocidal agent generation system in Figure 7 is shown generally at 50. System 50 provides the heat energy necessary to convert the liquid microbiocidal agent into a gaseous microbiocidal agent. System 50 includes a shell and tube type heat exchanger for the purpose of transferring heat energy from a recirculation gas to another fluid, in this case the microbiocidal agent, which may be used for microbial decontamination. System 50 is shown with a portion of the outer cover removed to facilitate understanding and explanation.

System 50 includes a shell 52 and a plurality of tubes 54 disposed therein. Attached to and communicating with the interior of shell 52 is gas line 56 for recirculating gas through the system 50. The gas line 56 is in communication with a heater 58 to heat the gas traveling through gas line 56. The gas line 56 can be constructed to contain a fluid as well to provide heating of the tubes 54.

In operation, the gas travels in a direction as indicated by arrow 60 through gas line 56, where it is heated by heater 58. The heated gas is introduced via gas line 56 in a direction indicated by arrow 62 into the interior 64 of shell 52. The heated gas then travels about a series of baffles 66 within the shell 52. Baffles 66 direct the gas in a substantially sinusoidal flow throughout the interior 64 of the shell 52, such that the gas will flow around and contact tubes 54, thereby transferring heat from the gas to the tubes 54. The gas travels in a sinusoidal flow substantially as indicated by arrows 68 to then exit the shell 52 into gas line 56 where the (now cooler) gas is recirculated to be exposed again to heater 58 for the process to repeat.

While the gas is flowing through the interior 64 of the shell 52, liquid microbiocidal agent is introduced into heat exchanger inlet 69 in a direction indicated by arrow 70. The agent is then distributed to flow into the plurality of tubes 54. While moving through tubes 54, the heat from the gas is transferred to the tubes 54 and ultimately to the liquid microbiocidal agent, which is heated until it becomes a gaseous or vaporized microbiocidal agent. Thereafter, the heated (now gaseous) microbiocidal agent flows to outlet 72 as indicated by arrow 74. The gaseous microbiocidal agent exits system 50 for subsequent use, such as for treatment of food products.

As shown in Figure7, a fluid conduit 59 is in communication with the heater 58. The conduit 58 provides a fluid to be heated to the heater 58. The heater 58 can include a pump, such as a self-priming pump, to circulate the fluid through the conduit 56 and into the chamber 64 of the apparatus 50.

The system 52 can include manifolds 71, 73 at both the inlet 69 and outlet 72, respectively, for the plurality of tubes 54. That is, the fluid introduced at the inlet 69 is guided into the manifold 71 which distributes the liquid in a substantially uniform manner to the plurality of tubes 54 so that all are filled with a substantially equal amount of agent to be heated and vaporized. At the outlet 72 of the system 50, the manifold 73 is disposed in the shell 52 to receive opposite ends of the plurality of tubes 54 to substantially uniformly direct the agent to the outlet 72 where it is discharged as a gaseous microbiocidal agent.

An alternate embodiment calls for the plurality of tubes 54 being constructed and arranged as a single tube having one end in communication with the inlet 69 and an opposed end in communication with the outlet 72. An intermediate portion of the tube between the opposed ends is constructed and arranged in a sinusoidal manner to provide the agent introduced at the inlet 69 into the tube with a sufficient amount of residence time in the chamber 64 to be exposed to the heating effect of the fluid circulated through the line 56.

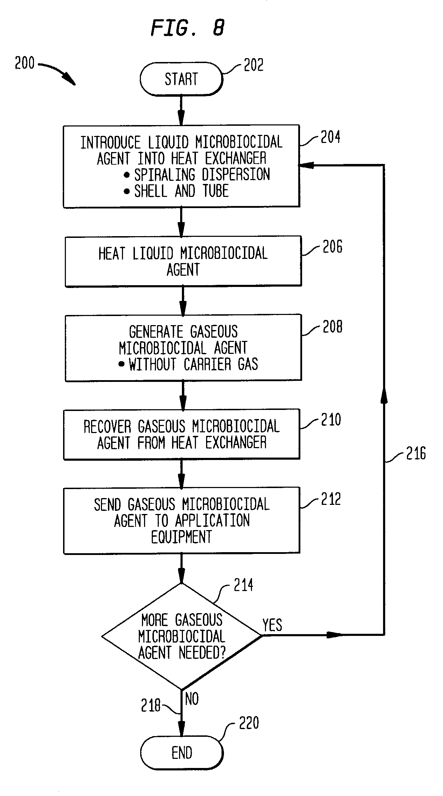

Figure 8 illustrates a methodology shown generally at 200 associated with the generation of the gaseous or vapor microbiocidal agent in accordance with the present invention. The process starts 202 when it is desired to generate gaseous microbiocidal agent for application to, for example, food products. The first step is to introduce 204 liquid microbiocidal agent into a heat exchanger. A plurality of heat exchangers may be used, including those at Figures 4 and 7. After introducing the liquid microbiocidal agent into the heat exchanger, the liquid microbiocidal agent is heated 206 by virtue of the operation of the heat exchanger. A gaseous microbiocidal agent is generated 208 by the heating of the liquid microbiocidal agent, and this generation of the gaseous agent occurs without a carrier gas. Therefore, it is not necessary to atomize the liquid microbiocidal agent prior to heating.

Since the gaseous microbiocidal agent is generated within the heat exchanger at 210, it is necessary to recover the gaseous microbiocidal agent from the heat exchanger. Following this recovery, the gaseous microbiocidal agent is provided 212 to application equipment suitable for the intended end product to which the gaseous microbiocidal agent will be applied. It is anticipated that this process may be performed on a discrete or continuous basis and at some point in the process it is determined 214 whether more gaseous microbiocidal agent is needed. If so 216, liquid microbiocidal agent is again introduced 204 and the process continues. If more agent is not needed 218, the generation process reaches end 220.

## Claims

1. A method of treating a product, comprising:
providing a liquid microbiocidal agent;
heating the liquid microbiocidal agent, wherein the heating step generates a gaseous microbiocidal agent from the liquid microbiocidal agent, and
applying the gaseous microbiocidal agent to the product.

2. A method according to claim 1, wherein the liquid microbiocidal agent is heated as it flows.

3. A method according to claim 2, further comprising disrupting the flow of the liquid microbiocidal agent to be heated.

4. A method according to claim 3, wherein the step of disrupting comprises dispersing the flow in a spiralling direction.

5. A method according to any one of the preceding claims, wherein the gaseous microbiocidal agent is applied without a carrier gas.

6. A method according to any one of the preceding claims, wherein the liquid microbiocidal agent is non-volatile.

7. A method according to any one of claims 1 to 5, wherein the liquid microbiocidal agent comprises lactic acid.

8. A method according to any one of the preceding claims, wherein the gaseous microbiocidal agent generated is used for microbial decontamination.

9. A method according to any one of the preceding claims, wherein the product is a food product.

10. An apparatus for generating a microbiocidal agent and for use in a method according to any one of the preceding claims, comprising:
a container for receiving a liquid microbiocidal agent, the container including an inlet, an outlet and a chamber disposed in the container between the inlet and the outlet;
heating means exposed to the chamber of the container for heating the liquid microbiocidal agent introduced from the inlet into the chamber; and
flow control means disposed in the chamber of the container for controlling a flow of the liquid microbiocidal agent to be exposed to the heating means for vaporizing the liquid microbiocidal agent as a gas for discharge at the outlet of the container.

11. An apparatus according to claim 10, wherein the flow control means comprises a spiral shaped insert arranged in the chamber to disperse flow of the liquid microbiocidal agent to the heating means.

12. An apparatus according to claim 11, wherein the heating means comprises a heated wall of the container.

13. An apparatus according to claim 10, wherein the flow control means comprises a plurality of tubes in communication with the inlet and through which the liquid microbiocidal agent flows to be heated and vaporized for discharge at the outlet of the container.

14. An apparatus according to claim 13, wherein the heating means comprises a fluid line having opposed ends each of which is in communication with the chamber; a heater in communication with the fluid line; and a fluid to be circulated through the fluid line and the chamber for being heated and to heat the plurality of tubes in the chamber.

15. An apparatus according to claim 14, wherein the heater and fluid line coact to recirculate the fluid through the chamber of the container.

16. An apparatus according to claim 14, further comprising disruption means disposed in the chamber of the container to disrupt a flow of the heated fluid in the chamber.

17. An apparatus according to claim 16, wherein the disruption means comprises a plurality of baffles.
